# FASCICULE DE BREVET EUROPEEN

(11) **EP 4 347 537 B1**
(45) Date de publication et mention de la délivrance du brevet: **20.08.2025**
(21) Numéro de dépôt: 22733704.5
(22) Date de dépôt: 01.06.2022
(51) Int. Cl.: C05F 1/00, C05F 11/10

(54) **PROCEDE DE PRODUCTION D'UNE SOLUTION AQUEUSE CONTENANT DES ACIDES AMINES A PARTIR D'UN SOLUBLE DE POISSON(S), SOLUTION AQUEUSE ET PRODUITS FERTILISANTS ASSOCIES**
VERFAHREN ZUR HERSTELLUNG EINER AMINOSÄUREHALTIGEN WÄSSRIGEN LÖSUNG AUS FISCHLÖSLICHER, WÄSSRIGER LÖSUNG UND ZUGEHÖRIGE DÜNGEMITTEL
METHOD FOR PRODUCING AN AQUEOUS SOLUTION CONTAINING AMINO ACIDS FROM FISH SOLUBLE MATTER, AQUEOUS SOLUTION AND ASSOCIATED FERTILISING PRODUCTS

(30) Priorité: 01.06.2021 FR 2105772
(43) Date de publication de la demande: 10.04.2024
(73) Titulaire: SARIA, 92110 Clichy (FR)
(72) Inventeur: PROTOPOPOFF, Hélène, 44800 SAINT-HERBLAIN (FR); LOIRAT, Jasmine, 44000 NANTES (FR); BARREAU, Philippe, 29140 MELGVEN (FR); LECHEVIN, Samuel, 35760 SAINT GREGOIRE (FR)
(74) Mandataire: Santarelli
(86) Numéro de dépôt international: PCT/FR2022/051037
(87) Numéro de publication internationale: WO 2022/254147

(56) Documents cités:
- WO-A1-2021/092342
- CN-A- 105 152 690
- US-A- 5 393 318

## Description

### Domaine de l'invention

La présente invention concerne un procédé de production d'une solution aqueuse contenant des acides aminés à partir de la fraction soluble d'un mélange hétérogène de sous-produits de poissons. La présente invention concerne également un fertilisant liquide organique contenant la solution aqueuse de l'invention.

### Art antérieur

Les acides aminés biosourcés sont des produits reconnus comme biostimulants des végétaux, notamment pour leurs effets positifs sur les performances des cultures (amélioration de la croissance et production des plantes, amélioration de la qualité des récoltes, amélioration de la qualité du sol) et particulièrement dans des conditions de stress abiotiques.

Les fertilisants organiques sont sources de macronutriments (azote, phosphore, potassium, calcium, magnésium), de micronutriments (bore, cuivre, fer, chlorure, manganèse, molybdène, zinc) et de matières organiques qui favorisent la biodiversité du sol à l'inverse des fertilisants minéraux qui peuvent acidifier le sol et donc venir perturber sa fertilité biologique.

Il est connu de l'art antérieur d'utiliser la fraction soluble des sous-produits de poissons pour produire des fertilisants à base de poissons, ces produits dérivés de poisson augmentant significativement la quantité et de la qualité des récoltes de différentes espèces végétales ainsi que l'activité photosynthétique et améliorant les propriétés du sol.

Le document US 5 393 318 décrit un procédé de fabrication d'un engrais liquide à base de têtes de poissons. Des têtes de bonites sont bouillies. Le liquide obtenu est dégraissé et on y ajoute des enzymes. La température de la réaction enzymatique est de 60°C ; elle est maintenue pendant 3h. On chauffe ensuite à 95°C pour stopper la réaction. Après filtration, on obtient un liquide riche en acides aminés qui contient 7,9g/100g de protéines d'alanine, 6,2g/100g de protéines d'arginine, 5,5g/100g de protéines d'acide aspartique, 9,4g/100g de protéines d'acide glutamique, 15,5g/100g de protéines de glycine, 3,6 g/100g de leucine, 4,6g/100g de protéines de lysine, 1,5g/100g de protéines de phénylalanine 5,6g/100g de protéines de proline et 2,5g/100g de protéines de valine. Ce document ne s'intéresse pas à la possible prolifération bactérienne dans l'engrais liquide. Il part du postulat que, du fait du chauffage, pendant une durée non définie dans ce document, tous les micro-organismes ont été éliminés. Le liquide est stabilisé, soit par déshydratation partielle à 40% d'extrait sec sans ajustement du pH, soit par déshydratation totale (séchage). Le cas des formes thermorésistantes (formes sporulées) n'est pas envisagé.

Le document CN 105152690A décrit un procédé de fabrication d'un fertilisant organique à partir d'une suspension aqueuse de poisson. Le lysat de poisson est stérilisé au chlore ce qui a pour effet de désactiver les enzymes endogènes. Un traitement de désodorisation est effectué à 60-80°C pendant 30 à 40 minutes. Des enzymes sont ajoutées à la solution désinfectée et désodorisée. Ces enzymes proviennent des viscères des poissons ; elles sont ajoutées en une quantité de 5 à 10% en masse. L'hydrolyse est effectuée en milieu stérile à 30-40°C et à un pH de 5-7 pendant 5 à 10h. On chauffe ensuite à 90°C-100°C pour inactiver les enzymes. La composition obtenue est stérile, du fait de l'étape de désinfection et de l'hydrolyse menée en milieu stérile, et est stabilisée par déshydratation totale (lyophilisation). Ce procédé est néanmoins contraignant car la réaction enzymatique doit avoir lieu en milieu stérile. Il est de plus peu écologique du fait de l'utilisation de chlore. Par ailleurs, là encore, il n'est pas certain que les spores ou les formes sporulantes aient été traitées de manière à empêcher leur développement et leur prolifération dans le produit fini.

Le document WO 2021/092342 A1 décrit un procédé de fabrication d'un engrais organique à partir d'organismes marins. Ce procédé est efficace et permet d'obtenir un engrais enrichi en nutriments et en composés utiles à la culture de cultures et d'autres végétaux.

Or, il est important, dans les conditions d'emploi visées, compte tenu de la grande diversité des agents pathogènes (formes végétatives et spores) susceptibles d'être présents dans les matières organiques d'origine animale, de garantir l'innocuité microbiologique du produit à l'égard de l'homme, des animaux et de leur environnement, et notamment de réduire la teneur en bactéries pathogènes du produit, voire de la rendre nulle, et notamment de réduire la teneur en bactéries du genre *Clostridium,* plus particulièrement C. *perfringens,* voire de la rendre nulle. En effet, un produit contenant des bactéries pathogènes à un niveau inacceptable peut avoir un effet néfaste potentiel sur la santé de l'homme et des animaux lorsque ce produit est mis en contact avec des cultures légumières, maraîchères et/ou avec toutes productions végétales destinées à être consommée en l'état.

En effet, le genre *Clostridium* et notamment C. *perfringens,* est un pathogène ubiquiste, dont un des principaux réservoirs est le tractus intestinal des animaux (volailles, bovins, porcs, poissons). C. *perfringens* se multiplie rapidement dans un milieu à base de viande ou d'amidon dans un intervalle de température entre 30°C et 50°C ; un maintien d'un produit pendant plusieurs heures dans cette gamme de température rend possible une prolifération de cette bactérie au-delà de 10⁵/g. La cuisson détruit la plupart des formes végétatives, mais pas ou peu les spores. En effet, les spores de *Clostridium perfringens* montrent une certaine thermorésistance à des températures supérieures à 80°C. Seule une température de 100°C permet un abattement significatif des spores de *Clostridium perfringens.*

### Problèmes techniques à résoudre

La présente invention vise à remédier aux inconvénients décrits ci-dessus.

Un premier but de la présente invention est de proposer un procédé de fabrication d'une solution aqueuse contenant des acides aminés qui est économique et qui permet l'obtention d'une solution aqueuse contenant une quantité limitée de colonies de micro-organismes pathogènes (formes végétatives et spores), notamment des bactéries du genre *Clostridium* et en particulier de *C. perfringens.*

Un autre but de la présente invention est de proposer un procédé de fabrication d'une solution aqueuse contenant des acides aminés qui ne nécessite pas d'ajustement du pH lors de l'étape enzymatique.

Un autre but de la présente invention est de proposer un procédé qui permet à partir d'une matière première ayant une grande diversité dans sa composition, d'obtenir une solution aqueuse qui soit reproductible à l'échelle industrielle.

Un but de la présente invention est de proposer un solution aqueuse selon la revendication 8.

Un autre but de la présente invention est donc de proposer une solution aqueuse pouvant être pulvérisée et contenant au moins 80% en masse d'un mélange de peptides de masse inférieure à 3 kDa.

Un autre but de la présente invention est de proposer une solution aqueuse contenant des acides aminés et pouvant être conservée de 6 à 12 mois sans prolifération excessive de bactéries, en particulier d'au moins une bactérie choisie parmi les *Entérobactéries* (en particulier, *Escherichia coli)*, Entérocoques, *Clostridium* notamment *C. perfringens,* et *Salmonella.*

Un autre but de l'invention est de proposer une solution aqueuse qui ne contient pas ou peu de toxines associées produites par lesdites bactéries, et en particulier par *C. perfringens,* ces toxines étant reconnues comme pathogènes.

Un autre but de la présente invention est de proposer un procédé qui nécessite un traitement thermique pour l'inactivation de la réaction enzymatique et la destruction des microorganismes dont la durée est inférieure ou égale à 1 heure et qui soit efficace à une température de chauffe inférieure à 100°C.

Un autre but de la présente invention est de proposer un fertilisant qui puisse être appliqué sur des végétaux destinés à être consommé en l'état sans effet néfaste sur la santé de l'homme, sur la santé des animaux et sur l'environnement.

Un autre but de la présente invention est de proposer un biostimulant des végétaux qui permet par application racinaire et/ou foliaire à des stades de développement précis (floraison, production fruits) des végétaux traités d'améliorer l'efficacité d'utilisation des éléments nutritifs, et/ou la tolérance au stress abiotique, et/ou les caractéristiques qualitatives des végétaux cultivés, en particulier de stimuler la croissance végétative notamment en condition de carence en azote, et/ou d'augmenter la teneur en chlorophylle, notamment en condition de carence en azote et/ou d'augmenter la qualité nutritionnelle (notamment augmenter la teneur en vitamine C).

### Description de l'invention

La présente invention concerne un procédé de production d'une solution aqueuse contenant des acides aminés à partir d'un soluble de poisson(s) selon lequel :
- ledit soluble de poisson(s) étant à une température donnée, on lui ajoute, sans modification de pH, au moins une protéase ayant une activité protéolytique à ladite température donnée ;
- on abaisse le pH à une valeur inférieure à 4,5 par ajout d'au moins un acide ; et
- on chauffe ensuite à une température supérieure ou égale à 75°C et inférieure à 100°C pendant une durée supérieure ou égale à 5 minutes ; et
- on filtre pour obtenir ladite solution.

La Demanderesse a en effet constaté que le fait d'acidifier la solution obtenue avant son traitement thermique (lequel permet à la fois l'arrêt de la réaction enzymatique et la destruction d'un grand nombre de germes pathogènes dans la solution) améliore l'efficacité du traitement thermique en termes de nombre de réduction décimale de la charge bactérienne. Pour un même nombre donné de réduction décimale de la charge bactérienne, on observe une diminution de la durée et/ou de la température du traitement thermique, lorsque l'acidification est réalisée avant le traitement thermique. Le traitement thermique étant mis en œuvre à une température inférieure à 100°C, les acides aminés, peptides et protéines solubilisées ne sont pas dégradés.

Sans que la Demanderesse ne soit liée à cette explication, il semble que le nombre de spores bactériennes est nettement diminué lorsque l'acidification est mise en œuvre avant le chauffage (traitement thermique). On constate en effet une teneur limitée en colonies de spores de micro-organismes pathogènes dans la solution de l'invention, alors que l'activité de l'eau et l'humidité de la solution de l'invention accroît la thermorésistance des spores et pourrait permettre une survie desdites spores, et leur germination et prolifération si les conditions redeviennent favorables.

La filtration n'est pas limitée selon l'invention. Elle peut être, par exemple, une filtration avec un seuil de coupure égal ou supérieur à 80 mesh et égal ou inférieur à 120 mesh.

Avantageusement, la durée de chauffe (ou traitement thermique) peut être inférieure ou égale à 15 minutes, inférieure ou égale à 35 minutes ou inférieure ou égale à 60 minutes.

Le soluble de poisson et/ou la solution aqueuse obtenue peuvent également faire l'objet d'une concentration, notamment par évaporation sous vide. Ainsi le soluble de poisson(s) peut, par exemple être concentré avant l'ajout de l'enzyme. La solution aqueuse peut être concentrée avant ou après la filtration.

L'acidification peut être réalisée par ajout d'un acide organique ou inorganique seul ou en mélange. Avantageusement, on utilise un acide choisi parmi les acides organiques, en particulier l'acide propionique, l'acide acétique, l'acide lactique, l'acide butyrique, l'acide lignosulfonique, l'acide humique, l'acide citrique et les acides inorganiques, en particulier l'acide phosphorique, et les mélanges d'au moins deux de ces acides. L'acide phosphorique a l'avantage d'apporter du phosphore non organique dans la solution aqueuse de l'invention.

Avantageusement, après ajout du ou des acides, le pH est abaissé à une valeur inférieure ou égale à 4,5, de préférence comprise entre 4 et 4,5 et en particulier égale à 4,3 et/ou en ce l'on chauffe après ajout dudit acide jusqu'à une température égale ou supérieure à 75°C, en particulier, égale à 80°C, 85°C ou 90°C.

Selon un mode de mise en œuvre avantageux, on chauffe à 85°C pendant une durée égale ou supérieure à 5 minutes après acidification par le ou les acides.

Les températures précitées sont facilement atteintes sans trop de dépense énergétique ; le procédé de l'invention reste donc économe. Avantageusement, le pH est abaissé à une valeur telle que précitée et l'on chauffe jusqu'à une température telle que précitée. De telles valeurs de pH et de température permettent d'obtenir un nombre de réduction décimale de *Clostridium perfringens* égal à au moins 5.

Selon un mode de mise en œuvre particulier et combinable à chacun des modes de mise en œuvre précités, on ajoute une ou plusieurs endoprotéases et/ou une ou plusieurs exo protéases. Les enzymes ne sont pas limitées selon l'invention. Les enzymes de type métalloprotéases sont néanmoins à éviter car peu efficaces du fait probablement d'un empoisonnement des catalyseurs (cofacteurs) métalliques par les agents chélatants présents dans le soluble (sulfate, phosphate, protéines...).

A titre d'exemple, les enzymes suivantes peuvent être utilisées :
- Endopeptidase de Bacillus licheniformis sous forme liquide, serine alcaline protéase, type subtilisin : Alcalase 4 L, Alcalase 2,4 L FG, Alcalase 2,5L PF (Fournisseur : Novozymes)
- Endopeptidase de Bacillus licheniformis sous forme liquide, serine alcaline protéase, type subtilisine : Corolase APC (Fournisseur : ABEnzyme)
- Endopeptidase de Trichoderma reesei sous forme liquide, serine alcaline protéase, type thermomycolin : Corolase 8000 (Founisseur : ABEnzyme)
- Endopeptidase de Bacillus licheniformis sous forme liquide, serine alcaline protéase, type subtilisine : FoodPro Alcaline Protéase (Founisseur : Dupont /IFF)
- Endopeptidase de Bacillus licheniforme sous forme liquide, serine alcaline protéase, type subtilisine : Prolyve 1000 (Fournisseur : Lyven/Soufflet Biotechnologie)
- Exopeptidase d'Aspergillus oryzae : Flavourzyme 1000 L (Fournisseur : Novozymes)
- Exopeptidase de Trichoderma reesei : TS-E 2206 (Founisseur : Dupont /IFF)

Avantageusement, selon un mode de réalisation particulier, l'enzyme est une serine alcaline protéase de type subtilisine ayant un pH optimum pour l'activité protéolytique entre 8-9 ; et une température optimale pour l'activité protéolytique entre 60 - 70°C. Elle est avantageusement ajoutée à un ratio de 0,1 à 2,0% masse d'enzyme/ masse de matière première sèche.

Selon un mode de réalisation particulier, on ajoute ladite ou lesdites endoprotéases et/ou ladite ou lesdites exo protéases à un ratio enzyme/substrat sec égal ou supérieur à 0,1% et égal ou inférieur à 2%, à un pH compris entre 5 et 7, à une température comprise entre 50°C et 70°C, de préférence entre 55°C et 65°C, préférentiellement à 60°C, la température et le pH étant maintenus pendant une durée de 1 à 24 heures, de préférence de 1 à 4 heures.

Avantageusement, quel que soit le mode de mise en œuvre, ledit soluble de poisson est préalablement obtenu par :
- cuisson desdits sous-produits de poisson(s) et pressage;
- élimination de la fraction solide par pressage et d'au moins une partie de la matière grasse ; et éventuellement concentration.

Un tel soluble permet à partir de matières premières de composition disparates en termes de protéines d'obtenir une solution aqueuse dont la composition en acides aminés est reproductible.

Avantageusement, on concentre sous-vide jusqu'à obtenir un soluble de poisson ayant une teneur massique en matières sèches égale ou supérieure à 25% et inférieure ou égale à 45% et de préférence égale à 35%.

La cuisson du ou des poissons et/ou sous-produits de poissons est avantageusement effectuée à une température égale à 100°C. Le pH du soluble de poisson est avantageusement égal ou supérieur à 5 et inférieur ou égal à 7.

Le soluble est obtenu à partir de sous-produits de poissons pouvant être de la même espèce ou non. Son coût de revient est ainsi limité. Par ailleurs, les sous-produits de poisson, en particulier les entrailles (viscères) des poissons sont une importante source de contamination bactérienne. Le procédé de l'invention prend donc tout son sens lorsque le soluble de poisson est obtenu à partir de poissons entiers et/ou de sous-produits de poissons contenant des entrailles de poissons.

Avantageusement, le soluble contient un pourcentage massique de matières sèches égal ou supérieur à 25% et inférieur ou égal à 45% et/ou un pourcentage massique de protéines desdites matières sèches égal ou supérieur à 80% et/ou un pourcentage massique en minéraux desdites matières sèches inférieur ou égal à 20% et/ou un pourcentage massique en matières grasses desdites matières sèches inférieur ou égal à 10 %. Un tel soluble permet d'obtenir une composition aqueuse selon l'invention qui est particulièrement équilibrée en acides aminés pour son utilisation en tant que biostimulant et/ou fertilisant.

Avantageusement, le soluble de poisson(s) contient un pourcentage massique de molécules dont le poids moléculaire est supérieur à 10 kDa supérieur ou égal à 20% et inférieure ou égal à 60% et/ou il contient une quantité de taurine libre supérieure ou égale à 1,2 g/100g de protéines et inférieure ou égale à 2,0g/100g de protéines et/ou une quantité totale de glycine supérieure ou égale à 10,0 g /100g de protéines et inférieure ou égale à 18,1g/100g de protéines et/ou une quantité de proline supérieure ou égale à 4,4g/100g de protéines et inférieure ou égale à 8,0g/100g de protéines.

La présente invention concerne également une solution aqueuse contenant des acides aminés et pouvant être obtenue selon le procédé de l'invention.

Selon l'invention, la solution aqueuse contient un pourcentage massique de matières sèches égal ou supérieur à 30% et inférieur ou égal à 40%, et/ou un pourcentage massique en azote organique desdites matières sèches égal ou supérieur à 10,5% et égal ou inférieur à 12,5% et/ou un pourcentage massique en acides aminés totaux mesuré par rapport à sa teneur en protéines égal ou supérieur à 65% et/ou un pourcentage massique de desdites matières sèches en phosphore total égal ou supérieur à 2% et/ou un pourcentage massique desdites matières sèches en potassium total égal ou supérieur à 2,5% et égal ou inférieur à 3,0% et/ou un pH égal ou inférieur à 4,5, plus particulièrement compris entre 4 et 4,5 et/ou une activité de l'eau égale ou inférieure à 0,91.

Selon l'invention, la solution aqueuse contient un pourcentage massique de matières sèches égal ou supérieur à 33% et inférieure ou égal à 36%, et/ou un pourcentage massique en azote organique desdites matières sèches égal ou supérieur à 10,5% et égal ou inférieur à 12,5% et/ou un pourcentage massique en acides aminés totaux mesuré par rapport à sa teneur en protéines égal ou supérieur à 65% et/ou un pourcentage massique de desdites matières sèches en phosphore total égal ou supérieur à 2% et/ou un pourcentage massique desdites matières sèches en potassium total égal ou supérieur à 2,5% et égal ou inférieur à 3,0% et/ou un pH égal ou inférieur à 4,5, plus particulièrement compris entre 4 et 4,5 et/ou une activité de l'eau égale ou inférieure à 0,91.

Une telle solution aqueuse s'avère adaptée pour être utilisée pure ou diluée dans de l'eau en tant que biostimulant des végétaux.

Avantageusement, la solution aqueuse comprend au moins 98 % en masse de peptides de poids moléculaire inférieur ou égal à 10 kDa et au moins 80%, en particulier au moins 90% en masse de peptides de poids moléculaire inférieur ou égal à 3 kDa. Ces peptides de petites tailles, bien que n'étant pas des acides aminés libres, s'avèrent néanmoins être facilement assimilables par les végétaux. Selon un mode de réalisation particulier pouvant être combiné à l'un quelconque des modes de réalisation précités, en particulier avec la teneur en peptides de moins de 3 kDa, la solution aqueuse de l'invention contient moins de 15 g d'acides aminés libres pour 100g de protéines et plus particulièrement une masse d'acides aminés libres supérieure ou égale à 3,0 g pour 100g de protéines et inférieure ou égale à 9,0 g pour 100g de protéines.

Avantageusement, quel que soit le mode de réalisation de la solution aqueuse de l'invention, elle contient moins de 10g/100g de protéines d'acides aminés libres.

Selon un mode de réalisation particulier, la solution aqueuse de l'invention contient un pourcentage massique en alanine mesuré par rapport à sa teneur en protéine égal ou supérieur à 5,6 et égal ou inférieur 7,6 et/ou un pourcentage massique d'arginine mesuré par rapport à sa teneur en protéine égal ou supérieur à 4,3 et égal ou inférieur 5,9 et/ou un pourcentage massique en acide aspartique mesuré par rapport à sa teneur en protéine égal ou supérieur à 4,8 et égal ou inférieur à 5,6 et/ou un pourcentage massique en acide glutamique mesuré par rapport à sa teneur en protéine égal ou supérieur à 8,5 et égal ou inférieur à 10,1 et/ou un pourcentage massique en glycine mesuré par rapport à sa teneur en protéine égal ou supérieur à 10,1 et égal ou inférieur à 18,1 et/ou un pourcentage massique en hydroxyproline mesuré par rapport à sa teneur en protéine égal ou supérieur à 2,6 et égal ou inférieur à 5,0 et/ou un pourcentage massique de leucine, mesuré par rapport à sa teneur en protéine égal ou supérieur à 2,4 et égal ou inférieur à 3,6 et/ou un pourcentage massique en lysine mesuré par rapport à sa teneur en protéine égal ou supérieur à 3,2 et égal ou inférieur à 4,4 et/ou un pourcentage massique de phénylalanine, mesuré par rapport à sa teneur en protéine égal ou supérieur à 1,7 et égal ou inférieur à 2,1 et/ou un pourcentage massique de proline, mesuré par rapport à sa teneur en protéine égal ou supérieur à 4,4 et égal ou inférieur à 8,0 et/ou un pourcentage massique de valine mesuré par rapport à sa teneur totale en protéine égal ou supérieur à 1,7 et égal ou inférieur à 2,5. Les valeurs ci-dessus peuvent également s'exprimer en g d'acide aminé pour 100g de protéines contenues dans la solution de l'invention.

Selon un mode de réalisation particulier, la solution aqueuse de l'invention contient un pourcentage massique en alanine mesuré par rapport à sa teneur en protéine égal ou supérieur à 6,1 et égal ou inférieur 7,1 et/ou un pourcentage massique d'arginine mesuré par rapport à sa teneur en protéine égal ou supérieur à 4,7 et égal ou inférieur 5,5 et/ou un pourcentage massique en acide aspartique mesuré par rapport à sa teneur en protéine égal ou supérieur à 4,8 et égal ou inférieur à 5,6 et/ou un pourcentage massique en acide glutamique mesuré par rapport à sa teneur en protéine égal ou supérieur à 8,5 et égal ou inférieur à 10,1 et/ou un pourcentage massique en glycine mesuré par rapport à sa teneur en protéine égal ou supérieur à 12,1 et égal ou inférieur à 16,1 et/ou un pourcentage massique en hydroxyproline mesuré par rapport à sa teneur en protéine égal ou supérieur à 3,2 et égal ou inférieur à 4,4 et/ou un pourcentage massique de leucine, mesuré par rapport à sa teneur en protéine égal ou supérieur à 2,4 et égal ou inférieur à 3,6 et/ou un pourcentage massique en lysine mesuré par rapport à sa teneur en protéine égal ou supérieur à 3,2 et égal ou inférieur à 4,4 et/ou un pourcentage massique de phénylalanine, mesuré par rapport à sa teneur en protéine égal ou supérieur à 1,8 et égal ou inférieur à 2,0 et/ou un pourcentage massique de proline, mesuré par rapport à sa teneur en protéine égal ou supérieur à 5,3 et égal ou inférieur à 7,1 et/ou un pourcentage massique de valine mesuré par rapport à sa teneur totale en protéine égal ou supérieur à 1,7 et égal ou inférieur à 2,5. Les valeurs ci-dessus peuvent également s'exprimer en g d'acide aminé pour 100g de protéines contenues dans la solution de l'invention.

Selon un mode de réalisation particulier éventuellement combinable aux modes de réalisation précités, la solution aqueuse de l'invention contient un pourcentage massique en taurine sous forme libre mesuré par rapport à sa teneur en protéine égal ou supérieur à 1,0 et égal ou inférieur à 2,2, et de préférence égal ou supérieur à 1,3 et égal ou inférieur à 1,9. Les valeurs ci-dessus peuvent également s'exprimer en g d'acide aminé pour 100g de protéines contenues dans la solution de l'invention.

Selon un mode de réalisation particulier, éventuellement combinable aux modes de réalisation précités, elle contient, en masse au moins 10,5% d'azote organique pour 100g de matières sèches et au moins 1,0% de taurine libre/100g de protéines.

L'apport en glutamine de la solution aqueuse de l'invention permet de diminuer l'activité de la glutamine synthase lorsque la solution de l'invention est utilisée en tant que fertilisant ou dans la composition d'un fertilisant. Il en résulte pour la plante une économie d'énergie et la plante pousse davantage. L'acide glutamique (glutamine) est apporté sous forme d'acide aminé libre ou lié à d'autres acides aminés par liaison peptidique.

Selon un mode de réalisation particulier, combinable à chacun des autres modes de réalisation précités, la solution de l'invention contient un pourcentage d'acides aminés (libres et non libres) mesuré pour 100g de protéines, égal ou supérieur à 65 et inférieur ou égal à 80 et/ou elle présente un pH inférieur ou égal à 4,5, plus particulièrement égal ou inférieur à 4,4 et une activité de l'eau inférieure ou égale à 0,91, notamment égale à 0,906.

Avantageusement, elle présente un pH tel que précité et une activité de l'eau telle que précitée. Ces valeurs sont compatibles avec une conservation de la solution aqueuse de l'invention pendant 6 à 12 mois sans risque de prolifération excessive de bactéries.

La Demanderesse a constaté qu'une solution aqueuse telle que précitée, lorsqu'elle est utilisée comme biostimulant des végétaux ou dans la composition d'un tel produit permet d'obtenir des plantes plus productives, plus résilientes face à un stress abiotique exercé par un changement d'environnement comme une carence en azote et dont la composition élémentaire est plus riche qu'une plante non traitée. La croissance végétative, la teneur en chlorophylles, la teneur en azote foliaire de la plante est significativement plus importante après utilisation d'un fertilisant organique liquide tel que précité.

L'obtention de plantes plus productives, plus résilientes peut s'expliquer par une modification de l'activité de la nitrate réductase et de la glutamate synthase. La nitrate réductase est une enzyme catalysant la minéralisation et l'utilisation du nitrate en nitrite puis ammonium ou diazote. Cette enzyme est un indicateur du fonctionnement du cycle de l'azote. Les mesures mettent en évidence que l'activité de la nitrate réductase augmente avec la teneur de la solution de l'invention appliquée. Ainsi, le cycle de l'azote est stimulé en présence de la solution de l'invention. La glutamine synthase est une enzyme catalysant la condensation du glutamate et de l'ammoniac en glutamine i.e. la dégradation d'un acide aminé. La diminution de l'activité peut s'expliquer par le fait que la solution de l'invention est riche en glutamine, ainsi l'assimilation des acides aminés présents dans la solution de l'invention permet une économie d'énergie à la plante pour faire fonctionner les glutamine synthase foliaires.

L'obtention de plantes plus productives, plus résilientes peut également s'expliquer par la stimulation de la vie du sol. L'apport d'un fertilisant organique liquide tel que précité stimule la colonisation racinaire et n'impact pas négativement les cycles biogéochimiques du carbone et du phosphore.

La Demanderesse a également constaté que les acides aminés sont plus rapidement disponibles pour la plante. Cela est traduit par la baisse de l'activité de la leucine amino-réductase, responsable de la transformation des protéines en acides aminés. Ce résultat pouvant s'expliquer par une absorption de l'azote par la plante sous forme de peptides directement au niveau du fertilisant organique liquide de l'invention.

Selon l'invention, la solution aqueuse de l'invention contient moins de 10 UFC/g de bactéries *Clostridium,* notamment de *C perfringens* et moins de 10 UFC/g de spores de *Clostridium,* notamment de spores *de C. perfringens,* moins de 100 UFC/g de streptocoques fécaux (entérocoques) et moins de 10 UFC/g de *Salmonella.* Une telle solution peut être conservée pendant 6 à 12 mois sans risque de prolifération bactérienne excessive.

La présente invention concerne également un biostimulant comprenant ou constitué de la solution aqueuse l'invention et un fertilisant comprenant ou constitué de la solution aqueuse selon l'invention.

### Définitions

« endoprotéase » (ou endopeptidase) au sens du brevet s'entend d'une enzyme qui rompt les liaisons peptidiques au sein de la chaîne peptidique.

« exoprotéase » (ou exopeptidase) au sens du brevet s'entend d'une enzyme qui rompt la liaison peptidique entre le premier acide aminé et le second acide aminé de la chaine peptidique, et donc libère l'acide aminé N-terminal.

Les termes « sous-produits de poisson » au sens de l'invention désignent des poissons entiers et des parties non destinées à la consommation humaine choisies parmi : la peau, les arêtes, la tête et les viscères. Un sous-produit de poisson(s) au sens de l'invention contient avantageusement des viscères de poisson.

Un poisson entier, au sens de l'invention, contient ses viscères.

Les termes « plantes » ou « végétaux » désignent au sens de l'invention, tout végétal ou partie de végétal, telle que le système racinaire, la tige, la feuille ou le fruit, à n'importe quel stade de développement, de la graine à la plante mature.

« Biostimulant » ou « activateur de croissance », au sens de l'invention, s'entend de tout produit qui stimule les processus de nutrition des végétaux indépendamment des éléments nutritifs qu'il contient dans le seul but d'améliorer une ou plusieurs des caractéristiques suivantes des végétaux ou de leur rhizosphère : l'efficacité d'utilisation des éléments nutritifs, la tolérance au stress abiotique, les caractéristiques qualitatives et la disponibilité des éléments nutritifs confinés dans le sol ou la rhizosphère.

« Fertilisant » au sens de l'invention s'entend de toute substance, mélange, micro-organisme ou toute autre matière appliquée ou destinée à être appliquée sur des végétaux, seuls ou mélangés avec une autre matière, dans le but d'apporter aux végétaux des éléments nutritifs ou d'améliorer leur efficacité nutritionnelle. Les biostimulants des végétaux en font partie.

Les termes « nombre de réductions décimales » ou « taux de réduction décimale » noté « n » désignent le nombre de division par dix de la charge bactérienne et se calcule de la manière suivante : n = log (N₀/N) où N₀ correspond une population au temps 0 et N à une population au temps t.

Le terme « soluble de poisson » désigne une solution aqueuse contenant des protéines, des peptides et/ou acides aminés provenant de sous-produits de poissons.

Le terme « conservation » signifie au sens de la présente invention, la possibilité de conserver le produit dans un récipient fermé et n'ayant pas été ouvert, à une température ambiante idéalement inférieure à 25°C et au sec, sans prolifération bactérienne et/ou sans dénaturation de la composition chimique du produit, notamment des peptides et/ou des protéines, du fait par exemple, de réactions enzymatiques.

### EXEMPLES

### Exemple 1

### a) préparation du soluble de poisson

Le produit de départ est la fraction soluble des sous-produits de poissons riches en protéines, aussi appelé « soluble de poisson ». Cette fraction est récupérée après cuisson des sous-produits de poissons, élimination de la fraction solide par pressage, élimination d'une partie de l'huile par centrifugation et élimination de l'eau par concentration sous vide. Les conditions opératoires de l'évapo-concentration (concentration sous-vide) sont favorables à la sporulation des germes thermorésistants de type ASR tels que *C. perfringens.*

Le tableau 1 ci-dessous donne un exemple de soluble de poisson utilisable pour la fabrication de la solution aqueuse de l'invention.

**Tableau 1**

| Bilan sur valeurs nutritionnelles | | | |
|---|---|---|---|
| Paramètre | Unité | Valeur | Méthode d'analyse |
| Humidité | g/100 g de produit brut | 66.7+/- 0.8 | Thermogravimétrie. Adaptée du règlement CE 152/09 et de la norme NF V 04-401. L'échantillon est dispersé sur sable et séchée à 103°C +/- 2°C |
| Matières Sèches | g/100 g de produit brut | 33,3+/- 0.8 | |
| | | | Matières sèches = 100-Humidité |
| Matières grasses | g/100 g de produit sec | 1.8+/- 1.5 | Gravimétrie, Adaptée du règlement CE 152/09 L'échantillon est hydrolysé avec de l'acide chlorhydrique et filtré. Le résidu est séché et soumis à une extraction à l'éther de pétrole. Le solvant est distillé et le résidu séché puis pesé |
| Azote total | g/100 g de produit sec | 13,6+/- 0.4 | Kjeldahl (Titrimétrie). Adaptée du règlement CE 152/2009, de l'arrêté du 08/09/1977 (J.O du 03/11/1977) L'échantillon est digéré avec de l'acide sulfurique (avec le cuivre comme catalyseur). Les protéines sont converties en sulfate d'ammonium. L'échantillon est rendu alcalin et l'ammoniaque est distillé et titré. La teneur en protéines calculée avec le facteur 6.25 |
| Kjeldahl pour dosage des protéines | | | |
| Protéines Kjeldhal | g/100 g de produit sec | 85,0+/- 2.7 | |
| Matières Minérales | g/100 g de produit sec | 13,2+/- 0.9 | Gravimétrie Adaptée du règlement CE 152/2009. Incinération dans un four à 550°C |

### b) préparation de la solution aqueuse de l'invention

Le soluble de poisson obtenu à l'étape a) est introduit dans un réacteur. Le mélange obtenu est soumis à une hydrolyse enzymatique, sous agitation, avec une sérine endoprotéase (Savinase^{®} de Novozyme) ajoutée à un ratio de 0,5% enzyme/poids sec de matière première. L'hydrolyse enzymatique est réalisée à une température de 65°C. Le pH du mélange n'est pas modifié, il est égal à 6,1. L'hydrolyse enzymatique est mise en œuvre pour une durée de 4 heures.

L'arrêt de l'hydrolyse est réalisé par ajout d'une solution d'acide citrique à 50% jusqu'à atteindre un pH de 4 au sein du même réacteur. Le mélange obtenu est ensuite chauffé à 85°C pendant 15 minutes.

Le mélange est filtré à 0,8 mm et conditionné en conteneur de type « IBC ». L'activité de l'eau Aw est de 0,910.

Dans toute la présente demande la mesure de l'activité de l'eau est mesurée par l'aw-mètre Labswift-aw de Novasina (méthode interne INRD28). L'échantillon est placé dans un compartiment clos muni d'une cellule, après mise à l'équilibre, l'humidité relative de l'air emprisonné avec lui est mesurée. L'Awmètre "NOVASINA" mesure l'humidité d'équilibre (HRE) en % RH, directement liée à l'activité de l'eau selon la formule suivante : Aw = HRE/100.

La composition obtenue est une solution aqueuse pouvant être utilisée comme fertilisant organique liquide. Elle contient des acides aminés libres et non libres (c'est-à-dire formant des peptides et/ou des protéines). Sa composition est indiquée dans le tableau 2 ci-dessous :

**Tableau 2**

| Paramètre | Unité | Valeur | Méthode d'analyse |
|---|---|---|---|
| Matières Sèches | g/100 g de produit brut | 39,6 | NF U44 171 Dessiccation à 105°C |
| Protéines Kjeldhal | g/100 g de produit sec | 81,10+/-2.6 | Kjeldahl (Titrimétrie). |
| | | | Adaptée du règlement CE 152/2009, de l'arrêté du 08/09/1977 (J.O du 03/11/1977) L'échantillon est digéré avec de l'acide sulfurique (avec le cuivre comme catalyseur). Les protéines sont converties en sulfate d'ammonium. |
| | | | L'échantillon est rendu alcalin et l'ammoniaque est distillé et titré. La teneur en protéines calculée avec le facteur 6.25 |
| Azote total Kjeldahl pour valeur agronomique | g/100 g de produit sec | 12,10 | Kjeldahl, NF EN 15604 |
| Phosphore total | g/100 g de produit sec | 2,00 | NF ISO 11885 Eau Régale-ICP |
| Potassium total | g/100 g de produit sec | 2,50 | NF ISO 11885 Eau Régale-ICP |
| pH | - | 4,30 | Mesure directe par pHmétrie |
| aw | - | 0,910 | Méthode interne Awmètre Novasina |

Le Tableau 3 ci-dessous regroupe les poids moléculaires des peptides contenus dans la solution aqueuse de l'invention de l'exemple 1. La répartition des poids moléculaires, faite sur la partie soluble des produits à analyser, est obtenue par analyse chromatographique liquide HPLC. Cette méthode permet de déterminer la répartition des poids moléculaires de différents produits, contenant des protéines, peptides et acides aminés libres, par HPLC sur colonne chromatographique en perméation de gel séparant les composés en fonction de leur taille moléculaire. Cette détection se fait en Ultraviolet. HPLC-UV colonne SEC.

**Tableau 3**

| Bilan sur les poids moléculaires | |
|---|---|
| % PM > 10KDa | 0,62 |
| % PM ≤ 10KDa | 99,38 |
| % PM ≤ 3KDa | 84,73 |
| Mw (Da) | 1572 |
| Mn (Da) | 570 |
| Indice polydispersité Mw/Mn | 2,76 |

On constate que les peptides ont pour leur grande majorité une masse molaire inférieure ou égale à 3kDa. De tels peptides sont facilement assimilés par les végétaux du fait de leur taille.

Le tableau 4 ci-dessous indique les différents acides aminés contenus dans la solution de l'invention de l'exemple 1.

**Tableau 4**

| Bilan sur profil d'acides aminés totaux et libres (g/100g prot) | | |
|---|---|---|
| Acides aminés | Libres | Totaux |
| Ala | 0,72 | 6,89 |
| Arg | 0,00 | 5,34 |
| Asp | 0,06 | 4,85 |
| Cys | 0,10 | 0,20 |
| Glu | 0,48 | 8,74 |
| Gly | 0,24 | 16,05 |
| His | 0,08 | 1,03 |
| HyPro | NC | 4,24 |
| Ile | 0,10 | 1,21 |
| Leu | 0,21 | 2,50 |
| Lys | 0,27 | 3,30 |
| Met | 0,11 | 1,41 |
| Orn | 0,04 | 0,25 |
| Phe | 0,10 | 1,83 |
| Pro | 0,09 | 7,09 |
| Ser | 0,06 | 3,40 |
| Tau | 1,33 | NC |
| Thr | 0,11 | 2,06 |
| Trp | 0,00 | 0,09 |
| Tyr | 0,08 | 0,45 |
| Val | 0,27 | 1,79 |
| Total | 4,44 | 72,73 |

Les acides aminés sont détectés par hydrolyse acide par chromatographie ionique - UV) selon la norme ISO 13903:2005; EU 152/2009. La cystine et la méthionine sont mesurées après une hydrolyse oxydante par Chromatographie ionique - UV selon la norme ISO 13903:2005; EU 152/2009. Les acides aminés libres (sauf le tryptophane) sont mesurés par chromatographie ionique - UV selon la norme ISO 13903:2005). Le tryptophane, libre est mesuré par (HPLC) (LC/FLUO) selon la norme EN-ISO 130904:2016

La solution aqueuse de l'invention contient 13% de protéines en plus que celle décrite dans le document US 5 393 318, Elle contient de plus une plus grande quantité des acides aminés suivants : alanine, arginine, asparagine, glutamine, glycine, hydroxyproline, leucine, lysine, phénylalanine, proline, et valine.

L'augmentation de la teneur en glycine est intéressante car elle est connue pour augmenter la résistance aux stress environnementaux, notamment le givre. Elle est également connue pour améliorer le goût et la douceur des fruits et des feuilles ; la glycine est également un agent chélatant et un précurseur de la chlorophylle. De même, l'augmentation de la teneur en proline est intéressante car cette dernière est connue pour améliorer la qualité des récoltes au niveau organoleptique (teneur en sucres augmentée), améliorer la fermeté des fruits. La proline est également connue comme étant un osmoprotecteur : elle augmente la résistance des protéines, des enzymes et des membranes face aux effets dénaturants des teneurs en sels élevées et températures non physiologiques. C'est un agent anti-stress ; elle augmente la production et fertilité du pollen et permet la régulation de la balance en eau

De même, la taurine est connue pour augmenter la croissance racinaire et aérienne et améliore la qualité des récoltes.

### Exemple 2 : Etude des indicateurs sanitaires du soluble de poisson et de la solution de l'invention

Le Tableau 5 ci-dessous regroupe les différents types de flores et bactéries présentes dans le soluble de poisson de l'exemple 1.

**Tableau 5**

| Soluble de poisson | | | |
|---|---|---|---|
| Paramètre | Unité | Valeur | Méthode d'analyse |
| Flores aérobies mésophiles 30°C | UFC/g | < 2000 | NF EN ISO 4833-1 ou XP V 08-034 |
| Bactéries ASR 46°C | UFC/g | 3400* | NF V 08-061 (boites) |
| Spores ASR (dont Clostridium) 46°C | UFC/g | 7400 | NF V 08-061 (boites) |
| Entérobactéries 30°C | UFC/g | < 10 | NF V 08-054 |
| Entérocoques (streptocoques fécaux) | UFC/g | < 100 | Méthode interne sur milieu Slanetz 48h a 37°C - Confirmation sur BEA |
| Levures | UFC/g | < 10 | NF V 08-059 |
| Moisissures | UFC/g | < 10 | NF V 08-059 |

| | | | |
|---|---|---|---|
| * nombre calculé à partir de la dernière dilution ensemencée | | | |

Le Tableau 6 ci-dessous regroupe les différents types de flores et bactéries présentes dans la solution aqueuse de l'invention obtenue dans l'exemple 1.

**Tableau 6**

| Solution aqueuse de l'invention | | | |
|---|---|---|---|
| Paramètre | Unité | Valeur | Méthode d'analyse |
| Flores aérobies mésophiles 30°C | UFC/g | < 200 | NF EN ISO 4833-1 ou XP V 08-034 |
| Bactéries ASR (dont *Clostridium*) 46°C | UFC/g | < 10 | NF V 08-061 (boites) |
| Spores ASR 46°C | UFC/g | 50* | NF V 08-061 (boites) |
| Entérobactéries 30°C | UFC/g | < 10 | NF V 08-054 |
| Entérocoques (streptocoques fécaux) | UFC/g | < 100 | Méthode interne sur milieu Slanetz 48h a 37°C - Confirmation sur BEA |
| Levures | UFC/g | < 10 | NF V 08-059 |
| Moisissures | UFC/g | < 10 | NF V 08-059 |
| Salmonelle (hors *typhi* et *paratyphi*) | UFC/25g | 0 | NF EN ISO 6579-1 |
| Bactéries *Clostridium perfringens* | UFC/g | < 10 | NF EN ISO 7937 |
| Spores *Clostridium perfringens* | UFC/g | < 10 | NF EN ISO 7937 et NF V 08-250 |
| E. *Coli* β-glucuronidase + | UFC/g | < 10 | NF ISO 16649-2 |

| | | | |
|---|---|---|---|
| * Nombre Estimé prend en compte l'estimation des petits nombres | | | |

Au vu de la comparaison des tableaux 5 et 6, on constate une nette diminution de la flore aérobie mésophile 30°C et également une nette diminution de la quantité de bactéries et de spores anaérobies sulfito-réductrices (ASR dont le genre Clostridium fait partie) dans la solution aqueuse de l'invention par rapport au soluble de poisson de départ. Ces spores anaérobies sulfito-réductrices et notamment *Clostridium* et plus particulièrement *C. perfringens,* lorsque qu'elles sont activées et placées dans des conditions favorables, sont capables de se transformer en de nouvelles cellules capables de se reproduire et d'engendrer une colonisation bactérienne dans le produit fini, au cours du temps. On constate donc que la solution aqueuse de l'invention a moins de risque de donner lieu à une prolifération notable de bactéries et notamment de bactéries du genre Clostridium et plus particulièrement de *C. perfringens.*

### Exemple 3 : Etude de l'effet de l'inversion de l'étape d'acidification avec le traitement thermique en termes de nombre de réductions décimales de la charge bactérienne

Le logiciel de simulation Sym'Previus est un logiciel de modélisation qui permet d'évaluer l'efficacité d'un traitement thermique pour éliminer un micro-organisme. Il calcule le taux de réduction en fin de traitement et la probabilité de survie d'éventuels micro-organismes. Il prend en compte la thermorésistance de chaque souche de bactéries, la température de chauffe, sa durée, le pH du produit traité et l'activité de l'eau de ce dernier.

Les valeurs de D - c'est-à-dire la durée nécessaire pour diviser par 10 la population, des spores de *Clostridium perfringens* - varient en fonction des souches. A une température de chauffe de 100°C, il faut, en fonction des souches, entre 0,2 et 43 minutes pour diviser par 10 la population des spores de *Clostridium perfringens.* A une température de chauffe de 95°C, il faut entre 1,3 et 63 minutes. Les spores de *Clostridium perfringens* sont plus thermorésistantes que les bactéries *Escherichia coli* et *Salmonella spp.* En effet, à une température de chauffe de 60°C, il faut entre 0,5 et 3 minutes pour diviser par 10 la population de bactéries *Escherichia coli* et, entre 2 et 6 minutes pour diviser par 10 la population de bactéries *Salmonella spp.* La température et la durée de l'étape d'hydrolyse, et la montée en température à 85°C réalisée en dix minutes pour le traitement thermique, permettent d'éliminer le risque de développement de *Escherichia coli* et *Salmonella* spp. dans la solution aqueuse de l'invention. Pour évaluer l'efficacité du traitement thermique de l'invention, le nombre de réduction décimale des bactéries sporulantes de *Clostridium perfringens* est donc suivi et est calculé à l'aide du logiciel Sym'previus. Un abattement des bactéries pathogènes est considéré comme significatif à partir de 5 réductions décimales (Règlement (UE) N°142/2011). Le nombre de réduction décimale de bactéries sporulantes de *Clostridium perfringens* ciblé pour garantir l'efficacité du traitement thermique est donc de 5 réductions décimales.

Le tableau 7 ci-dessous indique en fonction de la température de chauffe, de la durée de chauffe, le nombre de réduction décimale moyen et minimum au seuil de confiance de 95% de bactéries sporulantes de *Clostridium perfringens* obtenu pour le produit sans acidification préalable avec une activité de l'eau (aw) de 0,927 +/- 0,009 et un pH de 5,9 (sans acidification).

**Tableau 7**

| | | Nombre de réduction décimale | | | | |
|---|---|---|---|---|---|---|
| T°C de consigne | temps (en minutes) | 0 | 5 | 15 | 35 | 50 |
| 75°C | en moyenne | 0,1 | 0,2 | 0,4 | 0,7 | 1 |
| | au seuil mini de confiance 95% | | 0,1 | 0,2 | 0,3 | 0,4 |
| 80°C | en moyenne | 0,1 | 0,5 | 0,9 | 1,6 | 2,3 |
| | au seuil mini de confiance 95% | | 0,2 | 0,4 | 0,6 | 0,9 |
| 85°C | en moyenne | 0,3 | 1 | 2,3 | 4,2 | 5 |
| | au seuil mini de confiance 95% | | 0,4 | 0,9 | 1,5 | 2,3 |
| 90°C | en moyenne | 0,9 | 2,6 | 5,6 | 9,6 | 14,4 |
| | au seuil mini de confiance 95% | | 1 | 2,3 | 3,8 | 5,7 |

Le tableau 8 ci-dessous indique en fonction de la température de chauffe, de la durée de chauffe, le nombre de réduction décimale moyen et minimum au seuil de confiance de 95%, de bactéries sporulantes de *Clostridium perfringens* obtenu pour le produit ayant subi l'étape d'acidification avant l'étape de traitement thermique (produit de l'invention) ; l'ajout d'acide permet d'obtenir un pH de 4,3 ; l'activité de l'eau (aw) est de 0,919 +/- 0,006 .

On remarque qu'en dépit d'une activité de l'eau supérieure à 0,91, le procédé de l'invention est efficace en termes de réduction de la charge bactérienne et de la charge en spores et/ou espèces sporulantes.

**Tableau 8**

| | | Nombre de réduction décimal | | | | |
|---|---|---|---|---|---|---|
| T°C de consigne | temps (en min) à partir de l'obtention de la température de consigne | 0 | 5 | 15 | 35 | 50 |
| 75°C | en moyenne | 1,2 | 2,5 | 4,7 | 7,5 | 10,9 |
| | au seuil mini de confiance 95% | | 1,1 | 2 | 3,2 | 4,5 |
| 80°C | en moyenne | 1,9 | 5,5 | 10,8 | | |
| | au seuil mini de confiance 95% | 0 | 2,4 | 4,7 | | |
| 85°C | en moyenne | 3,7 | 12 | 26 | | |
| | au seuil mini de confiance 95% | 1,6 | 5 | 11,5 | | |
| 90°C | en moyenne | 6,5 | 29 | 63 | | |
| | au seuil mini de confiance 95% | 2,6 | 8,5 | 22 | | |

Au vu de la comparaison des tableaux 7 et 8, on constate que pour les bactéries *Clostridium perfringens,* le traitement thermique avant acidification (85°C pendant 15 min) permet d'obtenir une réduction décimale de 2,3 log avec 5% de chance d'être à un minimum de 0,9 log. Cette réduction est insuffisante si la contamination initiale est importante. Au contraire, lorsque ce même traitement thermique est effectué après acidification (85°C pendant 15 min), on obtient une réduction décimale de 26 log avec 5% de chance d'être à un minimum de 11 log, soit 10 fois plus importante que lorsque le traitement thermique est effectué avant acidification.

En référence aux tableaux 7 et 8, on constate que pour atteindre le nombre de réduction décimale cible de 5, il faut, lorsque le traitement thermique est effectué avant l'acidification, chauffer pendant plus de 50min à 85°C ou 15 min à 90°C avec des seuils de confiance de 95% inférieurs à la réduction décimale ciblée. Pour le même nombre de réduction décimale cible de 5, un chauffage de 5 minutes à 85°C est suffisant lorsque le traitement thermique est effectué après acidification.

### Exemple 4 : essai de vieillissement

La solution aqueuse de l'exemple 1 a été conservée à 15°C pendant 12 mois.

Le dosage de la flore bactérienne a été effectué à divers intervalles.

La charge bactérienne de la solution est inférieure à 3000 UFC/g après sa fabrication.

Un test de vieillissement de cette solution à température ambiante pendant 12 mois a été réalisé. Au bout de 12 mois, la charge bactérienne de la solution est inférieure à 10 UFC/g, le produit est donc stable dans le temps.

Le tableau 9 ci-dessous regroupe les résultats obtenus.

**Tableau 9**

| Solution aqueuse de l'invention | | | | | |
|---|---|---|---|---|---|
| Paramètre | Unité | T0 | T+4 mois | T+6 mois | T+12 mois |
| Flores aérobies mésophiles 30°C | UFC/g | < 3000 | 150 | < 100 | < 10 |
| Bactéries ASR 46°C | UFC/g | < 10 | 80* | 50* | 40* |
| Spores ASR 46°C | UFC/g | 40* | < 10 | 20** | 40* |
| Entérobactéries 30°C | UFC/g | < 10 | < 10 | < 10 | < 10 |
| Entérocoques (streptocoques fécaux) | UFC/g | < 100 | < 100 | < 100 | < 100 |
| Salmonelle (hors *typhi* et *paratyphi*) | UFC/25g | 0 | 0 | 0 | 0 |
| Bactéries *Clostridium perfringens* | UFC/g | < 10 | < 10 | < 10 | < 10 |
| Spores *Clostridium perfringens* | UFC/g | < 10 | < 10 | < 10 | < 10 |
| E. *Coli* β-glucuronidase + | UFC/g | < 10 | < 10 | < 10 | < 10 |
| Staphylocoques à coaqulase + | UFC/g | < 10 | < 10 | < 10 | < 10 |
| Levures | UFC/g | < 10 | < 10 | < 10 | < 100 |
| Moisissures | UFC/g | < 10 | < 10 | < 10 | < 100 |

| | | | | | |
|---|---|---|---|---|---|
| * Nombre Estimé prend en compte l'estimation des petits nombres ** présent à un taux inférieur au seuil de quantification de 40 | | | | | |

### Exemple 5 : effet biostimulant de l'invention sur la laitue

L'impact du traitement avec la solution aqueuse de l'invention sur le développement et la qualité de la laitue ainsi que sur la vie du sol en fonction de la teneur en azote du sol à la plantation a été étudié.

L'essai se déroule en chambre de culture selon un dispositif à 12 modalités de 5 répétitions à une hygrométrie de 70%, une photopériode de 14/10 h et une température de 18/15°C. Une culture de Laitue Beurre de variété Analota est plantée en pot de 1L rempli d'un mélange de 33% sable, 33% vermiculite et 33% de sol maraicher. Le tableau 10 décrit les teneurs en azote du sol à la plantation, les doses (dilution dans l'eau de la solution de l'invention) et les quantités de la solution de l'invention appliquée en fonction des modalités testées.

**Tableau 10**

| | | Unités d'azote | Produit | Doses | Nombre d'application | Modalités |
|---|---|---|---|---|---|---|
| NON STRESSE | Sol classique | 60 unités | Témoin | - | 0 | 1 |
| | | | Dose 1 | 0,75 ml.l⁻¹ | 3 | 2 |
| | | | Dose 2 | 1,50 ml.l⁻¹ | 3 | 3 |
| | | | Dose 3 | 3,00 ml.l⁻¹ | 3 | 4 |
| STRESSE | Sol médium | 20 unités | Témoin | - | 0 | 6 |
| | | | Dose 1 | 1,50 ml.l⁻¹ | 3 | 7 |
| | | | Dose 2 | 2,25 ml.l⁻¹ | 3 | 8 |
| | | | Dose 3 | 3,00 ml.l⁻¹ | 3 | 9 |
| | Sol faible | < 20 unités | Dose 1 | 1,50 ml.l⁻¹ | 3 | 10 |
| | | | Dose 2 | 2,25 ml.l⁻¹ | 3 | 11 |
| | | | Dose 3 | 3,00 ml.l⁻¹ | 3 | 12 |

La solution de l'invention a été appliquée par voie racinaire à raison de 2 applications à 0 et 21 jours ajoutées lors de la fertilisation à hauteur de 100 ml, la troisième application a été appliquée par voie foliaire, par pulvérisation après 35 jours à hauteur de 100 ml.

Les tableaux 11 et 12 indiquent la moyenne des résultats obtenus pour les paramètres physiologiques et biologiques mesurés.

**Tableau 11**

| | | NON STRESSE | | | |
|---|---|---|---|---|---|
| | | Sol classique | | | |
| | Unité | T | Dose 1 | Dose 2 | Dose 3 |
| Biomasse aérienne fraiche | g | 44,9 | 55,0 | 58,7 | 66,7 |
| Biomasse aérienne sèche | g | 5,5 | 5,5 | 5,5 | 5,8 |
| Biomasse racinaire fraiche | g | 16,2 | 20,2 | 16,6 | 17,1 |
| Biomasse racinaire sèche | g | 1,6 | 1,7 | 1,5 | 1,6 |
| Fréquence colonisation | % | 8,0 | 8,0 | 2,0 | 28,0 |
| Intensité de colonisation | % | 0,6 | 0,6 | 0,2 | 7,0 |
| Abondance en arbuscules | % | 6,0 | 6,0 | 2,0 | 10,0 |
| Vitamine C | mg/100g MS | n.m. | n.m. | n.m. | n.m. |
| B-glucosidase | mU | n.m. | n.m. | n.m. | n.m. |
| Leucine amino peptidase | mU | n.m. | n.m. | n.m. | n.m. |
| Phosphatase | mU | n.m. | n.m. | n.m. | n.m. |
| Chlorophylle | µg/cm² | 19,7 | 17,2 | 19,5 | 20,7 |
| Flavonols | - | 0,6 | 0,6 | 0,6 | 0,6 |
| Anthocyanes | - | 0,3 | 0,3 | 0,3 | 0,3 |
| Nutrient Balance Index (NBI) | - | 31,6 | 30,1 | 32,4 | 33,7 |

**Tableau 12**

| | | STRESSE | | | | | | | |
|---|---|---|---|---|---|---|---|---|---|
| | | Sol médium | | | | Sol faible | | | |
| | Unité | T | Dose 1 | Dose 2 | Dose 3 | T | Dose 1 | Dose 2 | Dose 3 |
| Biomasse aérienne fraiche | g | 18,5 | 20,7 | 22,5 | 26,0 | 26,6 | 31,3 | 39,6 | 41,7 |
| Biomasse aérienne sèche | g | 3,6 | 3,6 | 3,6 | 3,7 | 19,7 | 19,9 | 24,2 | 26,6 |
| Biomasse racinaire fraiche | g | 11,7 | 16,6 | 21,0 | 19,0 | 18,0 | 20,7 | 28,1 | 28,9 |
| Biomasse racinaire sèche | g | 1,5 | 1,7 | 1,8 | 2,1 | 7,5 | 11,8 | 15,1 | 26,3 |
| Fréquence colonisation | % | n.m. | n.m. | n.m. | n.m. | 93,3 | 86,7 | 90,7 | 86,7 |
| Intensité de colonisation | % | n.m. | n.m. | n.m. | n.m. | 10,7 | 13,6 | 17,8 | 17,8 |
| Abondance en arbuscules | % | n.m. | n.m. | n.m. | n.m. | 0,4 | 0,2 | 0,0 | 3,4 |
| Vitamine C | mg/100 g MS | n.m. | n.m. | n.m. | n.m. | 0,6 | 0,9 | 1,0 | 1,0 |
| B-glucosidase | mU | n.m. | n.m. | n.m. | n.m. | 0,6 | 0,5 | 0,5 | 0,6 |
| Leucine amino peptidase | mU | n.m. | n.m. | n.m. | n.m. | 11,4 | 10,8 | 11,3 | 9,6 |
| Phosphatase | mU | n.m. | n.m. | n.m. | n.m. | 1,0 | 1,1 | 1,0 | 1,0 |
| Chlorophylle | µg/cm² | 11,5 | 11,3 | 12,5 | 13,6 | 18,4 | 19,2 | 20,8 | 20,9 |
| Flavonols | - | 1,1 | 1,0 | 1,0 | 0,9 | 0,8 | 0,8 | 0,7 | 0,6 |
| Anthocyanes | - | 0,5 | 0,5 | 0,5 | 0,5 | 0,4 | 0,4 | 0,4 | 0,4 |
| Nutrient Balance Index (NBI) | - | 10,4 | 11,3 | 12,6 | 15,1 | 23,1 | 24,2 | 31,8 | 34,0 |

Au vu des tableaux 11 et 12, on constate que la productivité de la laitue en sol classique est augmentée de plus de 49% (44,9g de biomasse aérienne fraîche sans traitement / 66,7 g avec traitement avec la solution de l'invention). Sur sol medium, on observe une augmentation de 40% de la productivité (18,5 g de biomasse aérienne fraîche sur sol médium contre 26,0 g avec traitement avec la solution de l'invention). Sur sol pauvre, la biomasse aérienne fraîche passe de 26,6 g à 41,7 g. L'effet de la solution de l'invention sur la biomasse aérienne fraîche est concentration et sol-dépendant.

En référence aux tableaux 11 et 12, on constate que l'indice chlorophyllien (mesuré avec un capteur Dualex^{®} FORCE A) passe de 11,3 à 13,6 µg/cm² sur sol medium et de 18,4 à 20,9 µg/cm² sur sol pauvre après utilisation de la solution selon l'invention.

S'agissant de la croissance racinaire, la biomasse racinaire fraîche passe de 11,7 g sans traitement à 19,0 g avec traitement avec la solution de l'invention, sur sol medium. Sur sol pauvre, elle passe de 18,0 g sans traitement à 28,9 g avec traitement avec la solution de l'invention (voir tableau 11).

En référence au tableau 11, on remarque que la teneur en vitamine C dans la laitue augmente lorsque cette dernière est traitée avec la solution de l'invention (0,6g/100g de feuille sèche sans traitement contre 1,0g /100g de feuille sèche avec traitement).

En référence au tableau 11, on constate que l'indice flavonoïdes (mesuré avec un capteur dualex^{®} FORCE A) passe de 1,1 sans traitement à 0,9 avec traitement sur sol médium. Il passe de 0,8 sans traitement à 0,6 avec traitement sur un sol pauvre (carencé en azote). La teneur en flavonoïdes d'une plante est significative de sa réaction aux stress abiotiques. Plus la plante est stressée, plus sa teneur en flavonoïdes augmente.

Au vu de ces résultats, on constate une activité biostimulant de la solution de l'invention quel que soit le type de sol. Le traitement avec la solution de l'invention permet d'obtenir des plantes plus productives, plus résilientes aux conditions environnementales et dont la composition élémentaire est plus riche que la modalité non traitée avec la solution de l'invention.

Il a également été constaté une stimulation de la vie du sol engendrée par l'application de la solution aqueuse de l'invention. Cette augmentation de la colonisation fongique peut être mise en évidence par une coloration au bleu Trypan à partir d'un protocole publié par Phillips and Hayman en 1970. La solution de l'invention permet donc également de stimuler la vie du sol, ce qui a pour conséquence d'augmenter les échanges sol-plante, lesquels sont observables à travers l'augmentation de la colonisation fongique des racines.

Des résultats similaires ont été obtenus sur la tomate - pour laquelle on a de plus constaté une amélioration de la productivité de fruits, le blé et le radis.

Certains de ces résultats sont présentés dans la revue Infos Ctifl (Charlotte Berthelot et al., décembre 2021 : De coproduit à biostimulant, l'histoire d'un hydrolysat protéique). Cet article présente le résultat d'essais menés sur deux années, validant l'intérêt de l'utilisation de l'hydrolysat protéique selon l'invention en tant que biostimulant en culture de laitue beurre, radis rond et tomate grappes. Cette étude montre également que l'hydrolysat protéique selon l'invention facilite le développement végétal en conditions stressantes. Par exemple, le développement de la laitue est maintenu en conditions de stress hydrique et thermique, ainsi que lors d'une carence en azote. Dans cette dernière condition, les résultats mettent en évidence la possibilité d'une économie substantielle de fertilisant (fertilisation plus raisonnée). L'utilisation d'une solution aqueuse obtenue par le procédé de l'invention comme biostimulant est donc particulièrement avantageuse en contexte de stress abiotiques tel que des carences en azote ou encore des variations de température ou d'hygrométrie.

## Revendications

1. Procédé de production d'une solution aqueuse contenant des acides aminés à partir d'un soluble de poisson(s), selon lequel :
- ledit soluble de poisson(s) étant à une température donnée, on lui ajoute, sans modification de pH, au moins une protéase ayant une activité protéolytique à ladite température donnée ;
- on abaisse le pH à une valeur inférieure à 4,5 par ajout d'au moins un acide ; et
- on chauffe ensuite la solution acidifiée à une température supérieure ou égale à 75°C et inférieure à 100°C pendant une durée supérieure ou égale à 5 minutes et
- on filtre pour obtenir ladite solution.

2. Procédé de production selon la revendication 1, **caractérisé en ce que** par ajout dudit acide, le pH est abaissé à une valeur inférieure ou égale à 4,5, en particulier égale à 4,3 et/ou en ce l'on chauffe après ajout dudit acide jusqu'à une température égale ou supérieure à 75°C, en particulier, égale à 80°C, 85°C ou 90°C.

3. Procédé selon la revendication 1 ou 2, **caractérisé en ce que** l'on ajoute une ou plusieurs endoprotéases et/ou une ou plusieurs exo protéases.

4. Procédé selon la revendication 3, **caractérisé en ce que** l'on ajoute ladite ou lesdites endoprotéases et/ou ladite ou lesdites exo protéases à un ratio enzyme/substrat sec égal ou supérieur à 0,1% et égal ou inférieur à 2%, à une température comprise entre 50°C et 70°C, de préférence entre 55°C et 65°C, préférentiellement à 60°C, la température et le pH étant maintenus pendant une durée de 1 à 24 heures, de préférence de 1 à 4 heures.

5. Procédé selon l'une quelconque des revendications précédentes, **caractérisé en ce que** ledit soluble de poissons est obtenu par :
- cuisson desdits sous-produits de poisson(s);
- élimination de la fraction solide par pressage et d'au moins une partie de la matière grasse ; et éventuellement
- concentration.

6. Procédé selon la revendication 5, **caractérisé en ce que** ledit soluble contient un pourcentage massique de matières sèches égal ou supérieur à 25% et inférieur ou égal à 45% et/ou un pourcentage massique de protéines desdites matières sèches égal ou supérieur à 80% et/ou un pourcentage massique en minéraux desdites matières sèches inférieur ou égal à 20% et/ou un pourcentage massique en matières grasses desdites matières sèches inférieur ou égal à 10%.

7. Procédé selon la revendication 5 ou 6, **caractérisé en ce que** ledit soluble de poisson contient un pourcentage massique de molécules dont le poids moléculaire est supérieur ou égal à 10 kDa supérieur ou égal à 20% et inférieur ou égal à 60% et/ou **en ce qu'**il contient une quantité de taurine libre supérieure ou égale à 1,2g/100g de protéines et inférieure ou égale à 2,0g/100g de protéines et/ou une quantité totale de glycine supérieure ou égale à 10,0g/100g de protéines et inférieure ou égale à 18,1g/100g de protéines et/ou une quantité de proline supérieure ou égale à 4,4g/100g de protéines et inférieure ou égale à 8,0g/100g de protéines.

8. Solution aqueuse contenant des acides aminés et pouvant être obtenue selon le procédé selon l'une quelconque des revendications précédentes, **caractérisée en ce qu'**elle contient un pourcentage massique de matières sèches égal ou supérieur à 30% et inférieur ou égal à 40%, et moins de 10 UFC/g de bactéries *Clostridium* et notamment *C. perfringens,* moins de 10 UFC/g de spores de *Clostridium* et notamment de spores *de C. perfringens,* moins de 100 UFC/g de streptocoques fécaux et moins de 10 UFC/g de *Salmonella.*

9. Solution aqueuse selon la revendication 8, contenant des acides aminés, **caractérisée en ce qu'**elle a un pH compris entre 4 et 4,5.

10. Solution aqueuse selon la revendication 8 ou 9, **caractérisée en ce qu'**elle contient un pourcentage massique en azote organique desdites matières sèches égal ou supérieur à 10,5% et égal ou inférieur à 12,5% et/ou un pourcentage massique en acides aminés totaux mesuré par rapport à sa teneur en protéines égal ou supérieur à 65% et/ou un pourcentage massique desdites matières sèches en phosphore total égal ou supérieur à 2% et/ou un pourcentage massique desdites matières sèches en potassium total égal ou supérieur à 2,5% et égal ou inférieur à 3,0% et/ou une activité de l'eau égale ou inférieure à 0,91.

11. Solution aqueuse selon l'une quelconque des revendications 8 à 10, **caractérisée en ce qu'**elle comprend au moins 98 % en masse de peptides de poids moléculaire inférieur ou égal à 10 kDa et au moins 80%, en particulier au moins 90% en masse de peptides de poids moléculaire inférieur ou égal à 3 kDa.

12. Solution aqueuse selon l'une quelconque des revendications 8 à 11, **caractérisée en ce qu'**elle contient un pourcentage massique en alanine mesuré par rapport à sa teneur en protéine égal ou supérieur à 5,6 et égal ou inférieur 7,6 et/ou un pourcentage massique d'arginine mesuré par rapport à sa teneur en protéine égal ou supérieur à 4,3 et égal ou inférieur 5,9 et/ou un pourcentage massique en acide aspartique mesuré par rapport à sa teneur en protéine égal ou supérieur à 4,8 et égal ou inférieur à 5,6 et/ou un pourcentage massique en acide glutamique mesuré par rapport à sa teneur en protéine égal ou supérieur à 8,5 et égal ou inférieur à 10,1 et/ou un pourcentage massique en glycine mesuré par rapport à sa teneur en protéine égal ou supérieur à 10,1 et égal ou inférieur à 18,1 et/ou un pourcentage massique en hydroxyproline mesuré par rapport à sa teneur en protéine égal ou supérieur à 2,6 et égal ou inférieur à 5,0 et/ou un pourcentage massique de leucine, mesuré par rapport à sa teneur en protéine égal ou supérieur à 2,4 et égal ou inférieur à 3,6 et/ou un pourcentage massique en lysine mesuré par rapport à sa teneur en protéine égal ou supérieur à 3,2 et égal ou inférieur à 4,4 et/ou un pourcentage massique de phénylalanine, mesuré par rapport à sa teneur en protéine égal ou supérieur à 1,7 et égal ou inférieur à 2,1 et/ou un pourcentage massique de proline, mesuré par rapport à sa teneur en protéine égal ou supérieur à 4,4 et égal ou inférieur à 8,0 et/ou un pourcentage massique de valine mesuré par rapport à sa teneur totale en protéine égal ou supérieur à 1,7 et égal ou inférieur à 2,5.

13. Solution aqueuse selon l'une quelconque des revendications 8 à 12, **caractérisée en ce qu'**elle contient un pourcentage d'acides aminés mesuré pour 100g de protéines, égal ou supérieur à 65 et inférieur ou égal à 80 et/ou **en ce qu'**elle présente un pH inférieur ou égal à 4,5, plus particulièrement égal ou inférieur à 4,4 et une activité de l'eau inférieure ou égale à 0,91, notamment égale à 0,906.

14. Solution aqueuse selon l'une quelconque des revendications 8 à 13, **caractérisée en ce qu'**elle contient, en masse au moins 10,5% d'azote organique pour 100g de matières sèches et au moins 1,0% de taurine libre/100g de protéines.

15. Biostimulant ou fertilisant comprenant ou constitué de la solution aqueuse selon l'une quelconque des revendications 8 à 14.

## Patentansprüche

1. Verfahren zur Herstellung einer wässrigen Lösung, die Aminosäuren aus einer Fischlösung enthält, wobei:
- der Fischlösung bei einer bestimmten Temperatur ohne Änderung des pH-Werts mindestens eine Protease mit proteolytischer Aktivität bei dieser bestimmten Temperatur hinzugefügt wird;
- der pH-Wert durch Zugabe mindestens einer Säure auf einen Wert unter 4,5 gesenkt wird; und
- anschließend die angesäuerte Lösung für eine Dauer von mindestens 5 Minuten auf eine Temperatur von mindestens 75 °C und weniger als 100 °C erhitzt wird und
- gefiltert wird, um diese Lösung zu erhalten.

2. Herstellungsverfahren nach Anspruch 1, **dadurch gekennzeichnet, dass** durch Zugabe der Säure der pH-Wert auf einen Wert kleiner oder gleich 4,5, insbesondere gleich 4,3, gesenkt wird und/oder dass nach Zugabe der Säure auf eine Temperatur gleich oder höher als 75 °C, insbesondere gleich 80 °C, 85 °C oder 90 °C, erhitzt wird.

3. Verfahren nach Anspruch 1 oder 2, **dadurch gekennzeichnet, dass** eine oder mehrere Endoproteasen und/oder eine oder mehrere Exoproteasen hinzugefügt werden.

4. Verfahren nach Anspruch 3, **dadurch gekennzeichnet, dass** die Endoprotease(n) und/oder Exoprotease(n) zu einem Verhältnis Enzym/trockenes Substrat gleich oder größer als 0,1 % und gleich oder kleiner als 2 % bei einer Temperatur zwischen 50 °C und 70 °C, vorzugsweise zwischen 55 °C und 65 °C, vorzugsweise bei 60 °C, hinzugefügt werden, wobei die Temperatur und der pH-Wert über einen Zeitraum von 1 bis 24 Stunden, vorzugsweise von 1 bis 4 Stunden, aufrechterhalten werden.

5. Verfahren nach einem der vorhergehenden Ansprüche, **dadurch gekennzeichnet, dass** die Fischlösung durch Folgendes erhalten wird:
- Kochen des/der Fischnebenprodukte(s);
- Entfernen der Feststofffraktion durch Pressen und mindestens eines Teils des Fettes; und gegebenenfalls
- Konzentration.

6. Verfahren nach Anspruch 5, **dadurch gekennzeichnet, dass** die Lösung einen Massenprozentsatz an Trockenstoffen von 25 % oder mehr und von 45 % oder weniger und/oder einen Massenprozentsatz an Proteinen der Trockenstoffen von 80 % oder mehr und/oder einen Massenprozentsatz an Mineralien der Trockenstoffen von 20 % oder weniger und/oder einen Massenprozentsatz an Fett der Trockenstoffen von 10 % oder weniger enthält.

7. Verfahren nach Anspruch 5 oder 6, **dadurch gekennzeichnet, dass** die Fischlösung einen Massenprozentsatz von Molekülen enthält, deren Molekulargewicht größer oder gleich 10 kDa größer oder gleich 20 % und kleiner oder gleich 60 % ist, und/oder dass sie eine Menge an freiem Taurin größer oder gleich 1,2 g/100 g Protein und kleiner oder gleich 2,0 g/100 g Protein und/oder eine Gesamtmenge an Glycin größer oder gleich 10,0 g/100 g Protein und kleiner oder gleich 18,1 g/100 g Protein und/oder eine Menge an Prolin größer oder gleich 4,4 g/100 g Protein und kleiner oder gleich 8,0 g/100 g Protein enthält.

8. Wässrige Lösung, die Aminosäuren enthält und nach einem der vorhergehenden Ansprüche erhalten werden kann, **dadurch gekennzeichnet, dass** sie einen Massenprozentsatz an Trockenstoffen von 30 % oder mehr und von 40 % oder weniger und weniger als 10 KBE/g Clostridium-Bakterien und insbesondere *C. perfringens,* weniger als 10 KBE/g *Clostridium-Sporen* und insbesondere *C*. *perfringens-Sporen,* weniger als 100 KBE/g Fäkalstreptokokken und weniger als 10 KBE/g *Salmonellen* enthält.

9. Wässrige Lösung nach Anspruch 8, die Aminosäuren enthält, **dadurch gekennzeichnet, dass** sie einen pH-Wert zwischen 4 und 4,5 hat.

10. Wässrige Lösung nach Anspruch 8 oder 9, **dadurch gekennzeichnet, dass** sie einen Massenprozentsatz an organischem Stickstoff der Trockenstoffe gleich oder größer als 10,5 % und gleich oder kleiner als 12,5 % und/oder einen Massenprozentsatz an Gesamtaminosäuren, gemessen in Bezug auf ihren Proteingehalt, von gleich oder größer als 65 % und/oder einen Massenprozentsatz der Trockenstoffe an Gesamtphosphor gleich oder größer als 2 % und/oder einen Massenprozentsatz der Trockenstoffe an Gesamtkalium gleich oder größer als 2,5 % und gleich oder kleiner als 3,0 % und/oder eine Wasseraktivität von 0,91 oder weniger enthält.

11. Wässrige Lösung nach einem der Ansprüche 8 bis 10, **dadurch gekennzeichnet, dass** sie mindestens 98 Massen-% Peptide mit einem Molekulargewicht kleiner oder gleich 10 kDa und mindestens 80 Massen-%, insbesondere mindestens 90 Massen-%, Peptide mit einem Molekulargewicht kleiner oder gleich 3 kDa umfasst.

12. Wässrige Lösung nach einem der Ansprüche 8 bis 11, **dadurch gekennzeichnet, dass** sie einen Massenprozentsatz an Alanin, gemessen an seinem Proteingehalt, von gleich oder größer als 5,6 und gleich oder kleiner als 7,6 und/oder einen Massenprozentsatz an Arginin, gemessen an seinem Proteingehalt, von gleich oder größer als 4,3 und gleich oder kleiner als 5,9 und/oder einen Massenprozentsatz an Aspartinsäure, gemessen an seinem Proteingehalt, von gleich oder größer als 4,8 und gleich oder kleiner als 5,6 und/oder einen Massenprozentsatz an Glutaminsäure, gemessen an seinem Proteingehalt, von gleich oder größer als 8,5 und gleich oder kleiner als 10,1 und/oder einen Massenprozentsatz an Glycin, gemessen an seinem Proteingehalt, von gleich oder größer als 10,1 und gleich oder kleiner als 18,1 und/oder einen Massenprozentsatz an Hydroxyprolin, gemessen an seinem Proteingehalt, von gleich oder größer als 2,6 und gleich oder kleiner als 5,0 und/oder einen Massenprozentsatz an Leucin, gemessen an seinem Proteingehalt, von 2,4 oder mehr und 3,6 oder weniger und/oder einen Massenprozentsatz an Lysin, gemessen an seinem Proteingehalt, von 3,2 oder mehr und 4,4 oder weniger und/oder einen Massenprozentsatz an Phenylalanin, gemessen an seinem Proteingehalt, von 1,7 oder mehr und 2,1 oder weniger und/oder einen Massenprozentsatz an Prolin, gemessen an seinem Proteingehalt, von 4,4 oder mehr und 8,0 oder weniger und/oder einen Massenprozentsatz an Valin, gemessen an seinem Gesamtproteingehalt, von 1,7 oder mehr und 2,5 oder weniger enthält.

13. Wässrige Lösung nach einem der Ansprüche 8 bis 12, **dadurch gekennzeichnet, dass** sie einen Prozentsatz an Aminosäuren, gemessen pro 100 g Protein, von gleich oder größer als 65 und kleiner oder gleich 80 enthält und/oder dass sie einen pH-Wert von kleiner oder gleich 4,5, insbesondere kleiner oder gleich 4,4, und eine Wasseraktivität von kleiner oder gleich 0,91, insbesondere gleich 0,906, aufweist.

14. Wässrige Lösung nach einem der Ansprüche 8 bis 13, **dadurch gekennzeichnet, dass** sie, bezogen auf die Masse, mindestens 10,5 % organischen Stickstoff pro 100 g Trockenstoffe und mindestens 1,0 % freies Taurin/100 g Protein enthält.

15. Biostimulator oder Dünger, der die wässrige Lösung nach einem der Ansprüche 8 bis 14 umfasst oder daraus besteht.

## Claims

1. A method for producing an aqueous solution containing amino acids from a fish soluble, **characterised by**:
- said fish soluble being at a given temperature, adding at least one protease having proteolytic activity at said given temperature thereto, without modification of pH;
- lowering the pH to a value less than 4.5 by adding at least one acid; and
- then heating the acidified solution to a temperature greater than or equal to 75°C and less than 100°C for a duration greater than or equal to 5 minutes and
- filtering to obtain said solution.

2. The production method according to claim 1, **characterised in that** by adding said acid, the pH is lowered to a value less than or equal to 4.5, in particular equal to 4.3 and/or after adding said acid, heating to a temperature equal to or greater than 75°C, in particular equal to 80°C, 85°C or 90°C.

3. The method according to claim 1 or 2, **characterised by** adding one or more endoproteases and/or one or more exoproteases.

4. The method according to claim 3, **characterised by** adding said endoprotease(s) and/or said exoprotease(s) at an enzyme/dry substrate ratio equal to or greater than 0.1% and equal to or less than 2%, at a temperature between 50°C and 70°C, preferably between 55°C and 65°C, preferably at 60°C, the temperature and pH being maintained for a period from 1 to 24 hours, preferably from 1 to 4 hours.

5. The method according to any one of the preceding claims, **characterised in that** fish soluble is obtained by:
- cooking said fish by-product(s);
- removing the solid fraction by pressing and at least part of the fat; and optionally
- concentration.

6. The method according to claim 5, **characterised in that** said soluble contains a mass percentage of dry matter equal to or greater than 25% and less than or equal to 45% and/or a mass percentage of protein of said dry matter equal to or greater than 80% and/or a mass percentage of minerals of said dry matter equal to or less than 20% and/or a mass percentage of fat of said dry matter equal to or less than 10%.

7. The method according to claim 5 or 6, **characterised in that** said fish soluble contains a mass percentage of molecules whose molecular weight is greater than or equal to 10 kDa greater than or equal to 20% and less than or equal to 60% and/or **in that** it contains an amount of free taurine greater than or equal to 1.2g/100g of protein and less than or equal to 2.0g/100g of protein and/or a total amount of glycine greater than or equal to 10.0g/100g of protein and less than or equal to 18.1g/100g of protein and/or an amount of proline greater than or equal to 4.4g/100g of protein and less than or equal to 8.0g/100g of protein.

8. An aqueous solution containing amino acids and obtainable according to the method according to any one of the preceding claims, **characterised in that** it contains a mass percentage of dry matter equal to or greater than 30% and less than or equal to 40%, and less than 10 CFU/g of *Clostridium* bacteria and in particular *C. perfringens,* less than 10 CFU/g of *Clostridium* spores and in particular *C. perfringens* spores, less than 100 CFU/g of faecal streptococci and less than 10 CFU/g of *Salmonella.*

9. The aqueous solution according to claim 8, containing amino acids, **characterised in that** it has a pH between 4 and 4.5.

10. The aqueous solution according to claim 8 or 9, **characterised in that** it contains a mass percentage of organic nitrogen of said dry matter equal to or greater than 10.5% and equal to or less than 12.5% and/or a mass percentage of total amino acids measured relative to its protein content equal to or greater than 65% and/or a mass percentage of said dry matter in total phosphorus equal to or greater than 2% and/or a mass percentage of said dry matter in total potassium equal to or greater than 2.5% and equal to or less than 3.0% and/or a water activity of 0.91 or less.

11. The aqueous solution according to any one of claims 8 to 10, **characterised in that** it comprises at least 98% by mass of peptides with a molecular weight less than or equal to 10 kDa and at least 80%, in particular at least 90% by mass of peptides with a molecular weight less than or equal to 3 kDa.

12. The aqueous solution according to any one of claims 8 to 11, **characterised in that** it contains a mass percentage of alanine measured relative to its protein content equal to or greater than 5.6 and equal to or less than 7.6 and/or a mass percentage of arginine measured relative to its protein content equal to or greater than 4.3 and equal to or less than 5.9 and/or a mass percentage of aspartic acid measured relative to its protein content equal to or greater than 4.8 and equal to or less than 5.6 and/or a mass percentage of glutamic acid measured relative to its protein content equal to or greater than 8.5 and equal to or less than 10.1 and/or a mass percentage of glycine measured relative to its protein content equal to or greater than 10.1 and equal to or less than 18.1 and/or a mass percentage of hydroxyproline measured relative to its protein content equal to or greater than 2.6 and equal to or less than 5.0 and/or a mass percentage of leucine, measured with respect to its protein content equal to or greater than 2.4 and equal to or less than 3.6 and/or a mass percentage of lysine measured with respect to its protein content equal to or greater than 3.2 and equal to or less than 4.4 and/or a mass percentage of phenylalanine, measured with respect to its protein content equal to or greater than 1.7 and equal to or less than 2.1 and/or a mass percentage of proline, measured with respect to its protein content equal to or greater than 4.4 and equal to or less than 8.0 and/or a percentage by mass of valine measured with respect to its total protein content equal to or greater than 1.7 and equal to or less than 2.5.

13. The aqueous solution according to any one of claims 8 to 12, **characterised in that** it contains a percentage of amino acids measured relative to 100g of protein, equal to or greater than 65 and less than or equal to 80 and/or **in that** it has a pH less than or equal to 4.5, more particularly less than or equal to 4.4 and a water activity less than or equal to 0.91, in particular equal to 0.906.

14. The aqueous solution according to any one of claims 8 to 13, **characterised in that** it contains, by mass, at least 10.5% organic nitrogen relative to 100g of dry matter and at least 1.0% free taurine/100g of protein.

15. A biostimulant or fertiliser comprising or consisting of the aqueous solution according to any one of claims 8 to 14.
